# EUROPEAN PATENT APPLICATION

(11) **EP 3 907 792 A1**
(43) Date of publication of application: **10.11.2021**
(21) Application number: 20867206.3
(22) Date of filing: 25.09.2020
(51) Int. Cl.: H01M 4/38

(54) **SILICON COMPOSITE NEGATIVE ELECTRODE MATERIAL AND PREPARATION METHOD THEREFOR, AND LITHIUM ION BATTERY**

(30) Priority: 26.09.2019 CN 201910917536
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: PANG, Chunlei, Shenzhen, Guangdong 518106 (CN); SHI, Xiaotai, Shenzhen, Guangdong 518106 (CN); WANG, Jingwei, Shenzhen, Guangdong 518106 (CN); REN, Jianguo, Shenzhen, Guangdong 518106 (CN); HE, Xueqin, Shenzhen, Guangdong 518106 (CN)
(74) Representative: Gerbino, Angelo
(86) International application number: PCT/CN2020/117910
(87) International publication number: WO 2021/057929

(57) **Abstract**

Provided are a silicon composite negative electrode material and a preparation method therefor, and a lithium ion battery. The silicon composite negative electrode material comprises silicon composite particles and a carbon coating layer, wherein the carbon coating layer is coated on at least part of the surface of the silicon composite particle; and the silicon composite particle comprises silicon, a silicon oxide SiOₓ and a silicate containing the metal element M, wherein 0 < x < 2. The method comprises: condensing a silicon source vapor and a vapor containing the metal element M at 700-900 °C under a vacuum to obtain a silicon composite, the silicon composite comprising a silicon oxide SiOₓ and a silicate, wherein 0 < x < 2; and post-processing the silicon composite to obtain a silicon composite negative electrode material. In the preparation method provided by the present application, by controlling the condensation temperature to be within a specific range, the uniformity of the element distribution in the silicon composite negative electrode material is significantly improved, and the compactness of the condensed deposition body is also better. The distribution is uniform, thereby preventing the occurrence of other side reactions. The negative electrode material has an excellent cycle performance.

## Description

The present disclosure claims the priority to the Chinese patent application filed with the Chinese Patent Office on September 26, 2019 with the filing No. 2019109175362, and entitled "Silicon Composite Negative Electrode Material and Preparation Method therefor, and Lithium Ion Battery", all the contents of which are incorporated herein by reference in entirety.

### Technical Field

The present disclosure belongs to the technical field of energy storage materials, and relates to a negative electrode material, a preparation method therefor, and a lithium ion battery, in particular, to a silicon composite negative electrode material, a preparation method therefor, and a lithium ion battery.

### Background Art

With the expansion of application field of lithium ion batteries, especially rapid development of power transportation means such as electric automobiles, the lithium ion batteries become hot spots for research. The negative electrode material, as an important component part of the lithium ion batteries, affects the specific energy and cycle life of the lithium ion batteries, and is always an important point in the research of the lithium ion batteries.

Conventional graphite-based negative electrode materials are commonly used for mobile phones, notebook computers, digital cameras, electric tools and the like, and their capacity for storing lithium ions is relatively low (theoretically 372 mAh/g), which leads to the problem of low overall capacity of batteries manufactured thereby. Currently, the global automobile industry transitions from internal combustion engine to electric automobile, and therefore the requirements for battery energy density are also getting higher and higher, so that the lithium ion battery made of the conventional graphite-based negative electrode material cannot meet the requirements of the electric automobiles. The development of new lithium ion battery negative electrode materials with high energy density, good safety, and high power density is imminent.

With the highest theoretical specific capacity (4200 mAh/g) and a lower discharge potential, silicon is the most promising negative electrode material for the next generation lithium ion battery. However, because silicon undergoes large-volume expansion (up to 300%) in charge and discharge cycles, negative electrode cracking and pulverization are caused, which limits its commercial application. Among silicon compounds, silicon monoxide is a negative electrode material having a relatively high specific capacity, and compared with silicon, its volume changes less in the charge and discharge process. This is because silicon monoxide is lithiated to form elemental silicon, lithium oxide, and lithium silicate in the primary lithiation process. The elemental silicon generated in situ is dispersed in lithium oxide-lithium silicate amorphous matrix, and such a structure may buffer the volume change generated by active silicon in the process of lithium deintercalation and intercalation. Meanwhile, introduction of oxygen helps to reduce the volume change of silicon monoxide in the process of lithium deintercalation and intercalation. In addition, silicon monoxide also has the advantages such as low operating voltage, good safety, and wide sources of raw materials, so that silicon monoxide materials have become hot spots of interest to researchers in recent years.

Although silicon monoxide can alleviate its own volume expansion, in the primary cycle process, due to the irreversible generation of Li₂O, the consumption of Li in the positive electrode material is increased, and the irreversible capacity is increased, which leads to low first Coulombic efficiency thereof. These factors greatly limit the exertion of electrochemical performance of silicon monoxide and practical application thereof. In order to solve the above problems, a common method is to introduce a lithium source into silicon monoxide: the silicon monoxide directly reacts with the lithium, such as high-temperature alloying, high-energy ball milling; in the process of preparing an electrode, a metal lithium powder having an inert protective layer is added; and a finished electrode sheet is subjected to pre-lithiation with metal lithium. Although the first charge/discharge efficiency of the silicon monoxide can be significantly improved in this manner, as the metal lithium used has extremely strong activity (flammable and combustible), there is a great risk in the preparation process of the material and the electrode, which leads to difficulty in its practical application. On the other hand, as the process is complicated and costly, and raw materials with strong corrosiveness and strong toxicity need to be used, the industrial application thereof is hindered.

Therefore, there is a need for a technology that has good safety and low cost and is easy to be industrially implemented, so as to solve the above problems.

A single-layer/double-layer coated silicon oxide composite negative electrode material and a preparation method therefor. For the single-layer coated silicon oxide composite negative electrode material, the single-layer coated silicon oxide composite negative electrode material is a two-layer composite material having a core-shell structure, wherein an inner core is a silicon oxygen precursor, an outer layer is a lithium titanate layer, and the silicon oxygen precursor is a material formed by uniformly dispersing silicon in silicon dioxide. For the double-layer coated silicon oxide composite negative electrode material, the double-layer coated silicon oxide composite negative electrode material is a three-layer composite material having a core-shell structure, wherein an inner core is a silicon oxygen precursor, an intermediate layer is a lithium titanate layer, and an outermost layer is a carbon layer coated on an outer surface of the lithium titanate layer.

Another lithium ion secondary battery silicon oxide composite negative electrode material is formed by providing a stable carbon interspersed network structure material as a coating material and uniformly dispersing silicon oxide in the coating material, wherein the stable carbon interspersed network structure is a coating structure formed by in-situ carbonization and calcination of silicon oxide precursor composite material, and the silicon oxide precursor composite material is a blend of silicon oxide precursor, active metal, and molten salt.

Another silicon oxide for a negative electrode material of a nonaqueous electrolyte secondary battery is a lithium-containing silicon oxide obtained by co-depositing a SiO gas and a lithium-containing gas, and the lithium-containing silicon oxide has a lithium content of 0.1-20%.

Although all of the above methods can improve the performance of the silicon-based negative electrode material to some extent, the improvement on the cycle performance needs to be further enhanced.

### Summary

With regard to the above deficiencies existing in the prior art, the present disclosure aims at providing a silicon composite negative electrode material, a preparation method therefor, and a lithium ion battery. The silicon composite negative electrode material provided in the present disclosure has uniform distribution of elements inside and outside any particle, and has an excellent cycle performance.

In order to achieve this objective, the present disclosure adopts the following technical solution.

In a first aspect, the present disclosure provides a silicon composite negative electrode material, wherein the silicon composite negative electrode material includes silicon composite particles and a carbon coating layer, and the carbon coating layer covers at least part of surfaces of the silicon composite particles; and
the silicon composite particles include silicon, silicon oxide SiOₓ, and a silicate containing a metal element M, where 0<x<2.

For the silicon composite negative electrode material provided in the present disclosure, three elements Si, O, and M are uniformly distributed in the silicon composite particles, which is helpful for improving the first efficiency of a lithium battery made of the negative electrode material, and helpful for improving the cycle performance of the negative electrode material.

In a possible embodiment, the silicon composite negative electrode material satisfies at least one of the following conditions a∼b:
a. the metal element M in the silicate is at least one selected from the group consisting of Li, Mg, Al, and Ca; and
b. the silicate in the silicon composite particles is of a crystalline structure.

In a possible embodiment, the silicon composite negative electrode material satisfies at least one of the following conditions a∼c:
a. a mass fraction of oxygen element in the silicon composite negative electrode material is 15%∼35%;
b. a mass fraction of carbon element in the silicon composite negative electrode material is 1%∼25%; and
c. a mass fraction of the M element in the silicon composite negative electrode material is 2%∼30%.

In a possible embodiment, the silicon composite negative electrode material satisfies at least one of the following conditions a∼c:
a. the carbon coating layer has a thickness of 20 nm~500 nm;
b. the silicon composite negative electrode material has an average particle size of 0.5 µm∼50 µm; and
c. the silicon composite negative electrode material has a specific surface area of 0.5 m²/g∼50 m²/g.

In a possible embodiment, line scanning is performed on a section of the silicon composite particles using an energy dispersive spectrometer in combination with a scanning electron microscope, and in an element distribution map obtained, distribution curves of the Si element, the O element, and the M element are wave lines at parallel intervals.

In a second aspect, the present disclosure provides a preparation method for a silicon composite negative electrode material, wherein the method includes the following steps:
condensing a silicon source vapor and a vapor containing a metal element M at 700 °C∼900 °C under vacuum to obtain a silicon composite, wherein the silicon composite includes a silicon oxide SiOₓ and a silicate, where 0<x<2; and
performing post-treatment on the silicon composite to obtain a silicon composite negative electrode material.

In the preparation method provided in the present disclosure, the silicon composite is obtained by directly condensing the silicon source vapor and the vapor containing the metal element M. The silicon composite has good uniformity and compactness (degree of density), and is simple in process and low in cost; the silicon composite negative electrode material prepared is helpful for improving the first efficiency of a lithium battery made of the negative electrode material, and helpful for improving the cycle performance of the negative electrode material.

In a possible embodiment, the step of condensing a silicon source vapor and a vapor containing a metal element M at 700 °C∼900 °C to obtain a silicon composite specifically includes the following steps:
heating and vaporizing a first raw material and a second raw material in a vacuum environment to obtain the silicon source vapor and the vapor containing the metal element M, wherein the first raw material is SiO and/or a material for preparing SiO, and the second raw material is the metal M or a material for preparing the metal M; and
condensing the silicon source vapor and the vapor containing the metal element M at 700 °C~900 °C under vacuum to obtain a solid phase silicon composite.

In a possible embodiment, the method satisfies at least one of the following conditions a∼c:
a. the metal element M in the silicate is at least one selected from the group consisting of Li, Mg, Al, and Ca;
b. the silicate in the silicon composite is of a crystalline structure; and
c. the silicon composite has an average particle size of 2 µm∼100 µm.

In a possible embodiment, the method satisfies at least one of the following conditions a∼i:
a. the material for preparing SiO includes a mixture of SiO₂ and a reducing substance;
b. the material for preparing M includes a mixture of an oxide of the metal element M and a reducing substance;
c. the reducing substance for reducing SiO₂ include Si and/or C;
d. the reducing substance for reducing the oxide of M includes at least one selected from the group consisting of Mg, Al, Zn, Na, K, Ca, Li, C, and Ti;
e. the material for preparing SiO has an average particle size of 1 µm∼500 µm;
f. a vacuum degree of the vacuum environment is 0.1 Pa∼500 Pa;
g. the temperature of the heating and vaporizing is 1000 °C-1800 °C;
h. the temperature of the condensing is 700 °C∼850 °C; and
i. the period of the condensing is 1 h∼40 h.

In a possible embodiment, the method satisfies at least one of the following conditions a∼f:
a. a mass fraction of oxygen element in the silicon composite negative electrode material is 15%∼35%;
b. a mass fraction of the M element in the silicon composite negative electrode material is 2%∼30%;
c. a mass fraction of carbon element in the silicon composite negative electrode material is 1%∼25%;
d. the silicon composite negative electrode material has an average particle size of 0.5 µm∼50 µm;
e. the silicon composite negative electrode material has a specific surface area of 0.5 m²/g∼50 m²/g; and
f. the carbon coating layer has a thickness of 20 nm∼500 nm.

In a possible embodiment, specific steps of performing post-treatment on the silicon composite to obtain a silicon composite negative electrode material include:
pulverizing the silicon composite to obtain silicon composite particles; and
performing carbon coating and/or firing on the silicon composite particles to obtain the silicon composite negative electrode material.

In a possible embodiment, the method includes the following steps:
heating SiO and the metal M to 1000 °C∼1800 °C under vacuum of 0.1 Pa∼500 Pa for heating and vaporization, to obtain a mixed vapor composed of a silicon source vapor and a vapor containing the metal element M;
condensing the mixed vapor at 700 °C∼850 °C for 1 h∼40 h to obtain a silicon composite, wherein the silicon composite includes a silicon oxide SiOₓ and a silicate, where 0<x<2, and the metal element M is at least one selected from the group consisting of Li, Mg, Al, and Ca; and
performing pulverization, carbon coating, and firing treatment on the silicon composite so that a carbon coating layer is formed on at least part of surfaces of the silicon composite particles, to obtain the silicon composite negative electrode material.

In a third aspect, the present disclosure provides a lithium ion battery, wherein the lithium ion battery contains the above silicon composite negative electrode material or the silicon composite negative electrode material prepared according to the above preparation method.

Compared with the prior art, the present disclosure has following beneficial effects:
(1) In the preparation method provided in the present disclosure, by controlling the condensation temperature within a specific range, the uniformity of the element distribution in the silicon composite negative electrode material is significantly improved, and the compactness of the condensed deposition body is also better, occurrence of other side reactions is avoided due to the uniform distribution, and the finally prepared material has an excellent cycle performance.
(2) The silicon composite negative electrode material provided in the present disclosure has an excellent cycle performance.

### Brief Description of Drawings

FIG. 1 is a process flowchart of a preparation method for a silicon composite negative electrode material provided in an example of the present disclosure;
FIG. 2a is a scanning electron microscopic picture of a silicon composite negative electrode material prepared in Example 1 of the present disclosure;
FIG. 2b is an element distribution map of a particle section marked in FIG. 2a;
FIG. 3a is a scanning electron microscopic picture of a silicon composite negative electrode material prepared in Comparative Example 1;
FIG. 3b is an element distribution map of a particle section marked in FIG. 3a;
FIG. 4a is a scanning electron microscopic picture of a silicon composite negative electrode material prepared in Comparative Example 2;
FIG. 4b is an element distribution map of a particle section marked in FIG. 4a; and
FIG. 5 is a comparison graph of 50-cycle battery performance of silicon composite negative electrode materials prepared in Example 1, Comparative Example 1, and Comparative Example 2.

### Detailed Description of Embodiments

In order to better illustrate the present disclosure, and facilitate understanding the technical solutions of the present disclosure, the present disclosure is further described in detail below. However, the following embodiments are merely simple examples of the present disclosure, and do not represent or limit the scope of protection of the present disclosure, and the scope of protection of the present disclosure is determined by the claims.

In a first aspect, the present disclosure provides a silicon composite negative electrode material, wherein the silicon composite negative electrode material includes silicon composite particles and a carbon coating layer, the carbon coating layer covers at least part of surfaces of the silicon composite particles, and the silicon composite particles include silicon, silicon oxide SiOₓ, and a silicate containing a metal element M, where 0<x<2.

In the silicon composite negative electrode material provided in the present disclosure, when a section of constituent particles of the composite is analyzed using an energy dispersive spectrometer (EDS) in combination with a scanning electron microscope (SEM), the element distribution inside and outside any particle is uniform, and the silicon composite negative electrode material has a high first charge/discharge efficiency and good cycle performance.

It should be noted that the carbon coating layer is coated on the surfaces of the silicon composite particles. The surface referred to in the present disclosure is not merely a flat surface of the particles, and the carbon coating layer may also be filled in structures such as cracks and pores in the surfaces of the particles, which is not limited herein.

As an optional technical solution of the present disclosure, for the silicon oxide SiOₓ, 0<x<2, for example, x is 0.1, 0.2, 0.3, 0.4, 0.5, 0.6, 0.7, 0.8, 0.9, 1, 1.1, 1.2, 1.3, 1.4, 1.5, 1.6, 1.7, 1.8, or 1.9. The silicon oxide may include at least one selected from the group consisting of silicon monoxide and silicon dioxide.

As an optional technical solution of the present disclosure, the silicon composite particles may further include elemental silicon.

As an optional technical solution of the present disclosure, the silicate in the silicon composite particles is of a crystalline structure, the crystalline structure has good stability, lower probability of particle breakage and damage, fewer changes in the structure caused by lithium ion deintercalation and intercalation, and higher stability in air and water, so as to be beneficial to improve the cycle performance and thermal stability of the lithium ion battery.

As an optional technical solution of the present disclosure, the metal element M in the silicate is at least one selected from the group consisting of Li, Na, Mg, Al, Ca, Zn, and Fe. Preferably, the metal element M is at least one selected from the group consisting of Li, Mg, Al, and Ca.

As an optional technical solution of the present disclosure, the mass fraction of the oxygen element in the silicon composite negative electrode material is 15%∼35%, for example, 15%, 20%, 25%, 30% or 35%, but is not merely limited to the recited numerical values, and other unrecited numerical values within the numerical range are equally applicable. In the negative electrode material provided in the present disclosure, if the amount of oxygen element is too large, a part of electrochemically active Si in the material will be converted to SiO₂ with no capacity, which results in reduced capacity of the negative electrode material; if the amount of oxygen element is too small, the content of Si in the material will be too high or the size of the Si microcrystals will be too large, then too large volume expansion is produced in the cycle process after the negative electrode material is assembled into a battery, which adversely affects the cycle performance.

As an optional technical solution of the present disclosure, the mass fraction of the M element in the silicon composite negative electrode material is 2%∼30%, for example, 2%, 5%, 15%, 20%, 25% or 30%, but is not merely limited to the recited numerical values, and other unrecited numerical values within the numerical range are equally applicable. In the negative electrode material provided in the present disclosure, if the amount of the M element is too large, the size of the silicon microcrystals generated by the reaction between M and the silicon oxide will be too large, and the cycle performance will be affected, and on the other hand, incorporation of too much M reduces the proportion of the active substance, then the capacity is reduced; and if the amount of the M element is too small, the amount of Si generated by the reaction between the silicon oxide and M will be insufficient, the effect of improving the first-week Coulombic efficiency of the composite material is deteriorated, and a result of low first-week Coulombic efficiency appears.

As an optional technical solution of the present disclosure, the mass fraction of the carbon element in the silicon composite negative electrode material is 1%∼25%, for example, 1%, 5%, 10%, 15%, 20%, or 25%, but is not merely limited to the recited numerical values, and other unrecited numerical values within the numerical range are equally applicable. If the amount of the carbon element is too large, it means that the carbon coating amount on the surfaces of the silicon composite particles is too high, which hinders lithium ion transmission while affecting the capacity, and reduces the comprehensive performance of the negative electrode material; and if the amount of the carbon element is too small, it means that the carbon coating amount on the surfaces of the silicon composite particles is insufficient, and the product performance cannot be sufficiently exhibited.

As an optional technical solution of the present disclosure, the carbon coating layer has a thickness of 20 nm∼500 nm, for example, 20 nm, 50 nm, 100 nm, 150 nm, 200 nm, 250 nm, 300 nm, 350 nm, 400 nm or 500 nm, but not merely limited to the recited numerical values, and other unrecited numerical values within the numerical range are equally applicable. If the carbon coating layer is too thick, the lithium ion transmission efficiency is reduced, which is disadvantageous for the material to charge and discharge at a high rate, and reduces the comprehensive performance of the negative electrode material, and if the carbon coating layer is too thin, it is disadvantageous for increasing the electrical conductivity of the negative electrode material and has poor performance in suppressing the volume expansion of the material, resulting in poor long-term cycle performance.

As an optional technical solution of the present disclosure, the silicon composite negative electrode material has an average particle size of 0.5 µm~50 µm, for example, 0.5 µm, 1 µm, 5 µm, 10 µm, 20 µm, 30 µm, 40 µm, or 50 µm, but not merely limited to the recited numerical values, and other unrecited numerical values within the numerical range are equally applicable. Controlling the average particle size of the silicon composite negative electrode material within the above range is beneficial for improving the cycle performance of the negative electrode material.

As a preferable technical solution of the present disclosure, the silicon composite negative electrode material has a specific surface area of 0.5 m²/g~50 m²/g, for example, 0.5 m²/g, 1 m²/g, 5 m²/g, 10 m²/g, 20 m²/g, 30 m²/g, 40 m²/g, or 50 m²/g, but not merely limited to the recited numerical values, and other unrecited numerical values within the numerical range are equally applicable. The specific surface area of the silicon composite negative electrode material being within the above range is helpful for improving the first efficiency of the lithium battery made of the negative electrode material, and helpful for improving the cycle performance of the negative electrode material.

As a preferable technical solution of the present disclosure, when the line scanning is performed on the section of the silicon composite particles using an energy dispersive spectrometer in combination with a scanning electron microscope, in an element distribution map obtained, distribution curves of the Si element, the O element, and the M element are wave lines at parallel intervals. This indicates that the contents of the three elements Si, O, and M are kept at a constant level in a surface layer, an intermediate layer, and a particle center of the silicon composite particles, and the element distribution uniformity is quite good.

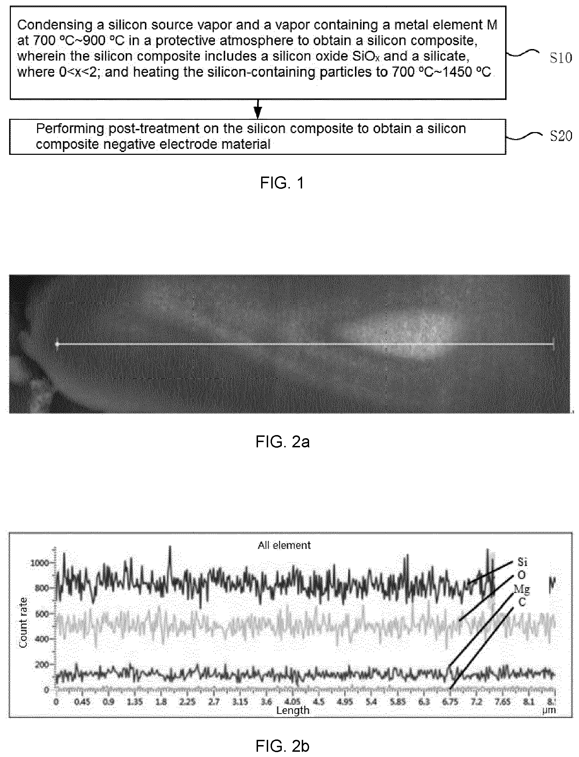

In a second aspect, the present disclosure provides a preparation method for a silicon composite negative electrode material, and as shown in FIG. 1, the method includes the following steps S10∼S20:
S10, condensing a silicon source vapor and a vapor containing a metal element M at 700 °C∼900 °C under vacuum to obtain a silicon composite, wherein the silicon composite includes a silicon oxide SiOₓ and a silicate, where 0<x<2; and
S20, performing post-treatment on the silicon composite to obtain a silicon composite negative electrode material.

In the preparation method provided in the present disclosure, the silicon composite is obtained by directly condensing the silicon source vapor and the vapor containing the metal element M. The silicon composite has good uniformity and compactness, and is simple in process and low in cost. In a vacuum environment, by mixing SiO vapor and the M vapor and cooling the same to form a deposition body, an M-element doped silicon composite may be prepared, in which the condensation temperature has a significant effect on the distribution uniformity and the degree of compactness of the elements in the composite, and further the performance of the battery prepared by the composite will be affected.

In the preparation method provided in the present disclosure, the condensation temperature is 700 °C∼900 °C, for example, the condensation temperature may be 700 °C, 725 °C, 750 °C, 775 °C, 800 °C, 825 °C, 850 °C, 875 °C, or 900°C, but are not merely limited to the recited numerical values, and other unrecited numerical values within the numerical range are equally applicable.

When the condensation temperature of the mixed vapor composed of the silicon source vapor and the vapor containing the M element is too low, the product vapor forms a material with a small particle diameter and poor compactness due to rapid cooling, and during the cooling, due to the difference in physical properties, especially the condensation points, of the two vapors themselves deposition amounts of the two vapors at different positions of a collector are different, and the obtained composite element distribution is significantly different. After the negative electrode material prepared from the composite is applied to the battery, due to non-uniform element distribution in the inside negative electrode material, in the cycle process, the electrical contact of the material will be destroyed due to local volume expansion, and finally, the cycle performance is lowered.

When the condensation temperature is too high, a certain component in the mixed vapor cannot be condensed and deposited or deposited in a small amount, which will cause a phenomenon of non-uniform element distribution in the deposition body; furthermore, when the condensation and deposition is performed at a relatively high temperature, the obtained deposition body undergoes violent reaction in the collector, and releases a large amount of heat in a short period of time, which promotes rapid disproportionation of unreacted SiO, and generates large-sized Si microcrystals in the deposition body. When the composite obtained under this condition is prepared into a negative electrode material and applied to a battery, the cycle performance will be reduced due to side reactions appearing because of the volume expansion of the Si microcrystals and non-uniform element distribution in the cycle process.

In the present disclosure, the adopted temperature range of 700 °C∼900 °C is more close to a condensation point of the mixed vapor, therefore at this time, the separation degree of the two vapors is minimum, and the mixing effect is the best, therefore, the element distribution in the obtained material is more uniform, and the compactness of the condensed deposition body is also better, thus the occurrence of other side reactions is avoided due to the uniform distribution, and the material finally prepared has an excellent cycle performance.

In the preparation method provided in the present disclosure, condensation may be realized by providing a condensation chamber in a reactor.

As an optional technical solution of the present disclosure, the step S10 specifically includes the following steps:
(1) heating and vaporizing the first raw material and the second raw material in a vacuum environment to obtain the silicon source vapor and the vapor containing the metal element M, wherein the first raw material is SiO and/or a material for preparing SiO, and the second raw material is the metal M or a material for preparing the metal M; and
(2) condensing the silicon source vapor and the vapor containing the metal element M at 700 °C∼900 °C under vacuum to obtain a solid phase silicon composite.

As an optional technical solution of the present disclosure, in step S10, the material for preparing SiO includes a mixture of SiO₂ and a reducing substance; the material for preparing M includes a mixture of an oxide of the metal element M and a reducing substance. In the present disclosure, the ratio of the first raw material to the second raw material may be selected according to the type of raw materials specifically selected and required element ratio.

As an optional technical solution of the present disclosure, the vacuum degree of the vacuum environment in step (1) is 0.1 Pa~500 Pa, for example, 0.1 Pa, 0.5 Pa, 1 Pa, 10 Pa, 20 Pa, 50 Pa, 80 Pa, 100 Pa, 200 Pa, 300 Pa, 400 Pa, or 500 Pa, but is not merely limited to the recited numerical values, and other unrecited numerical values within the numerical range are equally applicable.

As an optional technical solution of the present disclosure, the temperature of the heating and vaporizing is 1000 °C-1800 °C, for example, 1000 °C, 1100 °C, 1200 °C, 1300 °C, 1400 °C, 1500 °C, 1600 °C, 1700 °C, or 1800°C, but is not merely limited to the recited numerical values, and other unrecited numerical values within the numerical range are equally applicable. In the present disclosure, if the vaporization temperature is too high, the speed of generating the product vapor by the reaction will be too fast, and the amount of vapor entering a deposition chamber at the same time is too large, the mixing effect and the cooling effect of the vapor are both deteriorated, and the high-temperature vapor has side reactions here and generates by-products that are disadvantageous for the product preparation; if the vaporization temperature is too low, the evaporation rate and the evaporation amount of the two vapors do not match, and the uniformity of the composite collected after cooling and deposition deteriorates.

As an optional technical solution of the present disclosure, in step (1), the first raw material and the second raw material are placed at two ends of the same reactor. For example, the first raw material is placed at one end of the reactor near a furnace tail, the second raw material is placed at one end of the reactor near a furnace opening, after the first raw material is heated and vaporized to form the silicon source vapor and the second raw material is heated and vaporized to form the vapor containing the metal element M, the silicon source vapor is mixed with the vapor containing the metal element M. In another mode, the first raw material and the second raw material may be heated in a same temperature zone of the reactor to form vapor, or may be heated in different temperature zones of the reactor to form vapors respectively, and then the vapors are mixed, which is not limited herein.

As an optional technical solution of the present disclosure, in step (1), the raw material for preparing SiO includes a mixture of SiO₂ and a reducing substance. In the present disclosure, the reducing substance for reducing SiO₂ includes but is not limited to Si and/or C. The ratio of SiO₂ to the reducing substance may be set according to the prior art, which is not described herein again.

As an optional technical solution of the present disclosure, in step (1), the raw material for preparing M includes a mixture of an oxide of the metal element M and a reducing substance. In the present disclosure, the reducing substance for reducing the oxide of metal element M includes but is not limited to any one of Mg, Al, Na, K, Ca, Li, C, and Ti or a combination of at least two thereof. The ratio of the oxide of metal element M to the reducing substance may be set according to the prior art, which is not described herein again.

As an optional technical solution of the present disclosure, the temperature of the condensation in step (2) is 700 °C∼850 °C. By adopting the condensation temperature of 700 °C∼850 °C, the effect is more excellent, the element distribution uniformity of the product may be better, and the occurrence of the side reactions is better avoided, so that the final negative electrode material has more excellent cycle performance.

As an optional technical solution of the present disclosure, the period of the condensation in step (2) is 1 h∼40 h, for example, 1 h, 5 h, 10 h, 15 h, 20 h, 25 h, 30 h, 35 h, or 40 h, but is not merely limited to the recited numerical values, and other unrecited numerical values within the numerical range are equally applicable. Sufficient condensation can improve the production efficiency of the silicon composite.

As an optional technical solution of the present disclosure, the silicon composite has an average particle size of 2 µm∼100 µm, for example, the average particle size may be 2 µm, 10 µm, 20 µm, 30 µm, 40 µm, 50 µm, 60 µm, 70 µm, 80 µm, 90 µm, or 100 µm, but is not limited to the recited numerical values, and other unrecited numerical values within the numerical range are equally applicable.

As an optional technical solution of the present disclosure, the silicate in the silicon composite is of a crystalline structure, the crystalline structure has good stability, lower probability of particle breakage and damage, fewer changes in the structure caused by lithium ion deintercalation and intercalation, and higher stability in air and water, so as to be beneficial to improve the cycle performance and thermal stability of the lithium ion battery.

As an optional technical solution of the present disclosure, the step S20 specifically includes:
pulverizing the silicon composite to obtain silicon composite particles; and
performing carbon coating and/or firing on the silicon composite particles to obtain the silicon composite negative electrode material.

Optionally, the method of carbon coating includes introducing a carbon source for chemical vapor deposition. In the present disclosure, a specific method for chemical vapor deposition by introducing the carbon source and specific temperature and time for firing may be selected according to the method of carbon-coating an electrode material in the prior art, which is not described herein again.

As a further preferable technical solution of the preparation method of the present disclosure, the method includes the following steps:
heating SiO and the metal M under vacuum of 0.1 Pa∼500 Pa to 1000 °C∼1800 °C for heating and vaporization, to obtain a mixed vapor composed of a silicon source vapor and a vapor containing the metal element M;
condensing the mixed vapor at 700 °C∼850 °C for 1 h∼40 h to obtain a silicon composite, wherein the silicon composite includes a silicon oxide SiOₓ and a silicate, where 0<x<2, and the metal element M is at least one selected from the group consisting of Li, Mg, Al, and Ca;
performing pulverization, carbon coating, and firing treatment on the silicon composite so that a carbon coating layer is formed on at least part of surfaces of the silicon composite particles, to obtain the silicon composite negative electrode material.

In a third aspect, the present disclosure provides a lithium ion battery, wherein the lithium ion battery contains the composite negative electrode material in the first aspect above or the composite negative electrode material prepared according to the preparation method in the second aspect above.

Below a plurality of embodiments of the present disclosure are further illustrated, wherein the embodiments of the present disclosure are not limited to the following specific examples. Within the scope of protection, changes may be made as appropriate.

### Example 1

A silicon composite negative electrode material was prepared according to the following method in the present disclosure:
(1) mixing 5 kg of a silicon powder (D50 was 10 µm) and 10 kg of a silicon micro powder (D50 was 5 µm) with a VC mixer for 30 min to obtain an SiO raw material, and placing the same at an end of a reaction chamber of a vacuum furnace close to a furnace tail;
(2) placing 2 kg of a magnesium powder at an end of the reaction chamber of the vacuum furnace close to a furnace opening;
(3) arranging a collector in a condensation chamber, and heating to 1300 °C under a vacuum condition of 200 Pa to generate an SiO vapor and an Mg vapor in the furnace;
(4) controlling the temperature of the condensation chamber to be 800 °C, cooling a uniformly mixed gaseous mixture in the condensation chamber for 12 h to obtain a silicon composite, and after the reaction was finished, cooling the equipment and collecting a product 11 kg;
(5) making 5 kg of the product in step (4) subjected to processes such as crushing, ball milling, and classification to control a particle size (D50) thereof at 4 µm;
(6) placing the above 4 µm silicon composite in a CVD furnace, introducing a nitrogen gas through an outer path as a protective gas, introducing a methane gas through an inner path as a carbon source, and heating to 950 °C to decompose methane, wherein a nitrogen flow rate was set as 3.5 L/min in the reaction, and 5% carbon was coated on a surface of the negative electrode material; and
(7) after completing the coating, placing the obtained material in a roller kiln to undergo high temperature carbonization at 960 °C, to obtain a stable silicon composite negative electrode material.

The finally prepared silicon composite negative electrode material particles were cut using a Hitachi E-3500 ion miller, a topographic structure of a section thereof was observed on a Hitachi S-4800 cold-field emission scanning electron microscope, and the elemental composition and distribution thereof were observed using an Oxford energy dispersive spectrometer, UK.

FIG. 2a is a scanning electron microscopic picture of the silicon composite negative electrode material prepared in the present example; and FIG. 2b is an element distribution map of a particle section marked in FIG. 2a. In FIG. 2b, the distribution curves of elements Si, O, and Mg are parallel wave lines. It may be seen from FIG. 2a and FIG. 2b that at any position of the material particles, all of the contents of the three elements Si, O, and Mg are kept at a constant level, and the element distribution uniformity is quite good.

The silicon composite negative electrode material prepared in the present example includes silicon, silicon oxide, and magnesium silicate, the chemical formula of the silicon oxide is SiOₓ (x=0.63), and the surface and voids of the silicon composite negative electrode material further contain carbon. The silicon composite negative electrode material has an average particle size of 5.5 µm, and a specific surface area of 2 m²/g. In the silicon composite negative electrode material, a mass fraction of oxygen element is 26%, a mass fraction of magnesium element is 8%, and a mass fraction of carbon element is 5%.

See Table 1 for the performance characterization results of the silicon composite negative electrode material prepared in the present example.

### Example 2

The present example is merely different from Example 1 in that in step (4), the temperature of the condensation chamber is controlled to be 700 °C. The other operations for preparing the silicon composite negative electrode material are the same as those in Example 1.

The silicon composite negative electrode material prepared in the present example includes silicon, silicon oxide, and magnesium silicate, the chemical formula of the silicon oxide is SiOₓ (x=0.63), and the surface and voids of the silicon composite negative electrode material further contain carbon. The silicon composite negative electrode material has an average particle size of 5.5 µm, and a specific surface area of 3.5 m²/g. In the silicon composite negative electrode material, a mass fraction of oxygen element is 26%, a mass fraction of magnesium element is 8%, and a mass fraction of carbon element is 5%.

The silicon composite negative electrode material prepared in the present example was subjected to particle section line scanning using an energy dispersive spectrometer in combination with a scanning electron microscope, and results thereof are similar to those in Example 1, wherein the distribution curves of elements Si, O, and Mg are parallel wave lines, indicating that at any position of the material particles, the contents of the three elements Si, O, and Mg are kept at a constant level, and the element distribution uniformity is quite good.

### Example 3

The present example is merely different from Example 1 in that in step (4), the temperature of the condensation chamber is controlled to be 850 °C. The other operations for preparing the silicon composite negative electrode material are the same as those in Example 1.

The silicon composite negative electrode material prepared in the present example includes silicon, silicon oxide, and magnesium silicate, the chemical formula of the silicon oxide is SiOₓ (x=0.63), and the surface and voids of the silicon composite negative electrode material further contain carbon. The silicon composite negative electrode material has an average particle size of 5.5 µm, and a specific surface area of 3 m²/g. In the silicon composite negative electrode material, a mass fraction of oxygen element is 26%, a mass fraction of magnesium element is 8%, and a mass fraction of carbon element is 5%.

The silicon composite negative electrode material prepared in the present example was subjected to particle section line scanning using an energy dispersive spectrometer in combination with a scanning electron microscope, and results thereof are similar to those in Example 1, wherein the distribution curves of elements Si, O, and Mg are parallel wave lines, indicating that at any position of the material particles, the contents of the three elements Si, O, and Mg are kept at a constant level, and the element distribution uniformity is quite good.

### Example 4

(1) Mixing 5 kg of a silicon powder (D50 was 10 µm) and 10 kg of a silicon micro powder (D50 was 5 µm) with a VC mixer for 30 min to obtain an SiO raw material, and placing the same at an end of a reaction chamber of a vacuum furnace close to a furnace tail;
(2) placing 3 kg of an aluminum powder at an end of the reaction chamber of the vacuum furnace close to a furnace opening;
(3) arranging a collector in a condensation chamber, and heating to 1000 °C under a vacuum condition of 0.1 Pa to generate an SiO vapor and an Al vapor in the furnace;
(4) controlling the temperature of the condensation chamber to be 800 °C, cooling a uniformly mixed gaseous mixture in the condensation chamber for 12 h to obtain a silicon composite, and after the reaction was finished, cooling the equipment and collecting a product 8 kg;
(5) making 5 kg of the product in step (4) subjected to processes such as crushing, ball milling, and classification to control a particle size (D50) thereof at 4 µm; and
(6) placing the above 4 µm silicon composite in a CVD furnace, introducing a nitrogen gas through an outer path as a protective gas, introducing a methane gas through an inner path as a carbon source, and heating to 950 °C to decompose methane, wherein a nitrogen flow rate was set as 3.5 L/min in the reaction, and 4% carbon was coated on a surface of the negative electrode material.

The silicon composite negative electrode material prepared in the present example includes silicon, silicon oxide, and aluminum silicate, the chemical formula of the silicon oxide is SiOₓ (x=0.71), and the surface and voids of the silicon composite negative electrode material further contain carbon, and the carbon on the surface of the silicon composite negative electrode material forms a carbon film covering the surface. The silicon composite negative electrode material has an average particle size of 5.5 µm, and a specific surface area of 3 m²/g. In the silicon composite negative electrode material, a mass fraction of oxygen element is 28.6%, a mass fraction of aluminum element is 9.6%, and a mass fraction of carbon element is 4%.

When the silicon composite negative electrode material prepared in the present example was subjected to line scanning on a section of the constituent particles of the composite using an energy dispersive spectrometer in combination with a scanning electron microscope, in an element distribution map obtained, distribution curves of elements Si, O, and Al are parallel wave lines, indicating that at any position of the material particles, the contents of the three elements Si, O, and Al are kept at a constant level, and the element distribution uniformity is quite good.

See Table 1 for the performance characterization results of the silicon composite negative electrode material prepared in the present example.

### Comparative Example 1

In the present comparative example, except that the temperature of the condensation chamber is controlled to be 650 °C in step (4), the other operation conditions, types and amounts of raw materials and so on are the same as those in Example 1.

See Table 1 for the performance characterization results of the silicon composite negative electrode material prepared in the present comparative example.

The finally prepared silicon composite negative electrode material particles were cut using a Hitachi E-3500 ion miller, a topographic structure of a section thereof was observed on a Hitachi S-4800 cold-field emission scanning electron microscope, and the elemental composition and distribution thereof were observed using an Oxford energy dispersive spectrometer, UK.

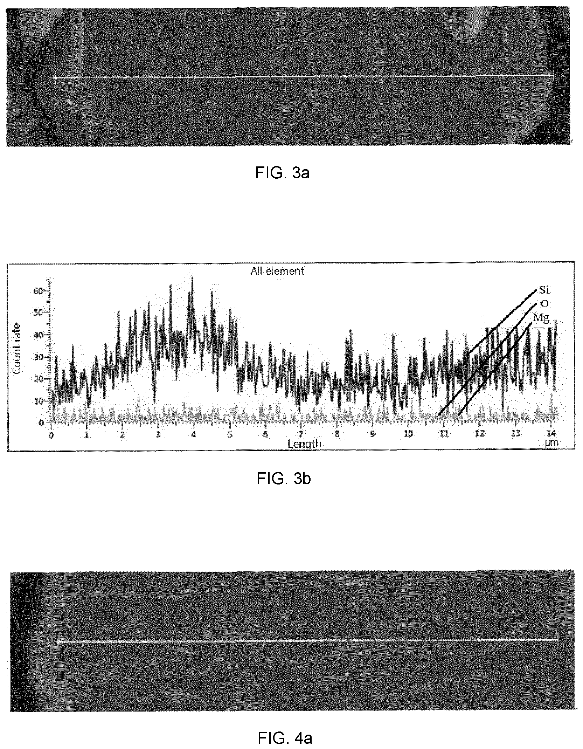

FIG. 3a is a scanning electron microscopic picture of the silicon composite negative electrode material prepared in the present comparative example; and FIG. 3b is an element distribution map of a particle section marked in FIG. 3a. In FIG. 3b, the distribution curves of elements Si, O, and Mg are obviously not parallel. It may be seen from FIG. 3a and FIG. 3b that the contents of the three elements Si, O, and Mg in a surface layer, an intermediate layer, and a particle center of the particles are quite different, and the element distribution is not uniform enough.

### Comparative Example 2

In the present comparative example, except that the temperature of the condensation chamber is controlled to be 950 °C in step (4), the other operation conditions, types and amounts of raw materials and so on are the same as those in Example 1.

See Table 1 for the performance characterization results of the silicon composite negative electrode material prepared in the present comparative example.

The finally prepared silicon composite negative electrode material particles were cut using a Hitachi E-3500 ion miller, a topographic structure of a section thereof was observed on a Hitachi S-4800 cold-field emission scanning electron microscope, and the elemental composition and distribution thereof were observed using an Oxford energy dispersive spectrometer, UK.

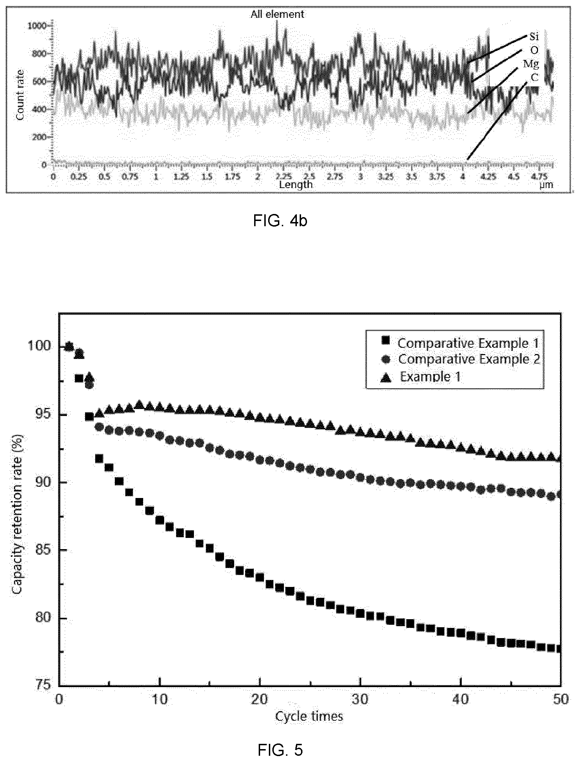

FIG. 4a is a scanning electron microscopic picture of the silicon composite negative electrode material prepared in the present example; and FIG. 4b is an element distribution map of a particle section marked in FIG. 4a. In FIG. 4b, the distribution curves of elements Si, O, and Mg are obviously not parallel. It may be seen from FIG. 4a and FIG. 4b that the contents of the three elements Si, O, and Mg in a surface layer, an intermediate layer, and a particle center of the particles are quite different, and the element distribution is not uniform too.

FIG. 5 is a comparison graph of 50-cycle battery performance of the silicon composite negative electrode materials prepared in Example 1, Comparative Example 1, and Comparative Example 2, and it may be seen from the figure that the cycle performance of Example 1 is the best, still with a capacity retention rate of 91.8% after 50 cycles, this is because in Example 1, the condensation temperature is controlled to a common condensation point which is the most suitable for cooling and depositing the mixed vapor, thus the bulk compactness and the element distribution uniformity obtained after deposition are both quite good. Moreover, the cycle performance of Comparative Example 1 and Comparative Example 2 is poor, the two vapors failed to be effectively mixed due to relatively low condensation temperature in Comparative Example 1, and the distribution of elements in the composite obtained after deposition is extremely non-uniform, therefore, the cycle retention ratio is the worst.

### Test Method

The silicon composite negative electrode materials prepared in each of the examples and the comparative examples were mixed with graphite at a ratio of 10:90, then mixed with sodium carboxymethyl cellulose CMC, binder styrene-butadiene rubber SBR, a conductive agent Super-P, and a conductive agent KS-6 at a mass ratio of 92:2:2:2:2 to obtain a slurry, and then the slurry was coated on a copper foil, and subjected to vacuum drying and rolling to prepare a negative electrode sheet; a positive electrode adopted a lithium sheet, a three-component mixed solvent of 1 mol/L LiPF6 (EC:DMC:EMC=1:1:1, v/v solution) was used as electrolyte, and a polypropylene microporous membrane acted as a diaphragm, they were assembled to form a CR2016 simulation battery. The cycle performance test used a current of 30 mA to perform constant current charging/discharging experiment, with a charging/discharging voltage being limited to 0-1.5 V. The electrochemical performance of experimental batteries fabricated with materials of various examples and comparative examples was tested using a LAND Battery Test System, Wuhan Jinnuo Electronics Co., Ltd., at a room temperature.

Test results are as shown in the following table:

**Table 1**

| | first cycle capacity (mAh/g) | 50 cycle capacity (mAh/g) | 50-cycle retention rate (%) |
|---|---|---|---|
| Example 1 | 464 | 426 | 91.8 |
| Example 2 | 480 | 433 | 90.3 |
| Example 3 | 471 | 428 | 90.8 |
| Example 4 | 469 | 428 | 91.3 |
| Comparative Example 1 | 484 | 376 | 77.7 |
| Comparative Example 2 | 513 | 457 | 89.1 |

As can be seen from summarization of the above examples and comparative example, in the preparation method provided in Examples 1-4, by controlling the condensation temperature within a specific range, the uniformity of the element distribution in the silicon composite negative electrode material is significantly improved, and the compactness of the condensed deposition body is also better, occurrence of other side reactions is avoided due to the uniform distribution, and the lithium battery prepared with the obtained negative electrode material has an excellent cycle performance.

The condensation temperature in Comparative Example 1 is too low, then the product vapor forms a material with a small particle diameter and poor compactness due to rapid cooling, and during the cooling, due to the difference in physical properties, especially the condensation points, of the two vapors themselves, deposition amounts of the two vapors at different positions of the collector are different, thus what is obtained is a composite with significantly different element distribution. After the negative electrode material prepared from the composite is applied to the battery, due to non-uniform element distribution in the inside negative electrode material, in the cycle process, the electrical contact of the material will be destroyed due to local volume expansion, and finally, the cycle performance is lowered.

The condensation temperature in Comparative Example 2 is too high, then a certain component in the mixed vapor cannot be condensed and deposited or deposited in a small amount, which will cause a phenomenon of non-uniform element distribution in the deposition body; furthermore, when the condensation and deposition is performed at a relatively high temperature, the obtained deposition body undergoes violent reaction in the collector, and releases a large amount of heat in a short period of time, which promotes rapid disproportionation of unreacted SiO, and generates large-sized Si microcrystals in the deposition body. When the composite obtained under this condition is prepared into a negative electrode material and applied to a battery, the cycle performance will be reduced due to side reactions appearing because of the volume expansion of the Si microcrystals and non-uniform element distribution in the cycle process.

The applicant states that the detailed process equipment and process flow of the present disclosure are illustrated through the above embodiments in the present disclosure, but the present disclosure is not limited to the above detailed process equipment and process flow, that is, it does not mean that the present disclosure must be implemented relying upon the detailed process equipment and process flow above. Those skilled in the art should know that any improvement on the present disclosure, equivalent substitutions of various raw materials and addition of auxiliary components of products of the present disclosure, selection of specific modes, etc., are included in the scope of protection and the scope of disclosure of the present disclosure.

## Claims

1. A silicon composite negative electrode material, wherein the silicon composite negative electrode material comprises silicon composite particles and a carbon coating layer, and the carbon coating layer covers at least part of surfaces of the silicon composite particles; and
the silicon composite particles comprise silicon, silicon oxide SiOₓ, and a silicate containing a metal element M, where 0<x<2.

2. The silicon composite negative electrode material according to claim 1, satisfying at least one of following conditions a∼b:
a. the metal element M in the silicate is at least one selected from the group consisting of Li, Mg, Al, and Ca; and
b. the silicate in the silicon composite particles is of a crystalline structure.

3. The silicon composite negative electrode material according to claim 1 or 2, satisfying at least one of following conditions a∼c:
a. a mass fraction of oxygen element in the silicon composite negative electrode material is 15%∼35%;
b. a mass fraction of carbon element in the silicon composite negative electrode material is 1%∼25%; and
c. a mass fraction of the M element in the silicon composite negative electrode material is 2%∼30%.

4. The silicon composite negative electrode material according to any one of claims 1-3, satisfying at least one of following conditions a∼c:
a. the carbon coating layer has a thickness of 20 nm∼500 nm;
b. the silicon composite negative electrode material has an average particle size of 0.5 µm∼50 µm; and
c. the silicon composite negative electrode material has a specific surface area of 0.5 m²/g∼50 m²/g.

5. The silicon composite negative electrode material according to any one of claims 1-4, wherein line scanning is performed on a section of the silicon composite particles using an energy dispersive spectrometer in combination with a scanning electron microscope, and in an element distribution map obtained, distribution curves of Si element, O element, and M element are wave lines at parallel intervals.

6. A preparation method for a silicon composite negative electrode material, wherein the method comprises following steps:
condensing a silicon source vapor and a vapor containing a metal element M at 700 °C∼900 °C under vacuum to obtain a silicon composite, wherein the silicon composite comprises a silicon oxide SiOₓ and a silicate, where 0<x<2; and
performing a post-treatment on the silicon composite to obtain a silicon composite negative electrode material, wherein the silicon composite negative electrode material comprises silicon composite particles and a carbon coating layer, and the carbon coating layer covers at least part of surfaces of the silicon composite particles.

7. The preparation method according to claim 6, wherein the step of condensing a silicon source vapor and a vapor containing a metal element M at 700 °C∼900 °C to obtain a silicon composite comprises following steps:
heating and vaporizing a first raw material and a second raw material in a vacuum environment to obtain the silicon source vapor and the vapor containing the metal element M, wherein the first raw material is SiO and/or a material for preparing SiO, and the second raw material is the metal M or a material for preparing the metal M; and
condensing the silicon source vapor and the vapor containing the metal element M at 700 °C∼900 °C under vacuum to obtain a solid phase silicon composite.

8. The preparation method according to claim 6 or 7, satisfying at least one of following conditions a∼c:
a. the metal element M in the silicate is at least one selected from the group consisting of Li, Mg, Al, and Ca;
b. the silicate in the silicon composite is of a crystalline structure; and
c. the silicon composite has an average particle size of 2 µm~100 µm.

9. The preparation method according to claim 7, satisfying at least one of following conditions a∼i:
a. the material for preparing SiO comprises a mixture of SiO₂ and a reducing substance;
b. the material for preparing M comprises a mixture of an oxide of the metal element M and a reducing substance;
c. the reducing substance for reducing SiO₂ comprises Si and/or C;
d. the reducing substance for reducing the oxide of M comprises at least one selected from the group consisting of Mg, Al, Zn, Na, K, Ca, Li, C, and Ti;
e. the material for preparing SiO has an average particle size of 1 µm∼500 µm;
f. a vacuum degree of the vacuum environment is 0.1 Pa∼500 Pa;
g. a temperature of the heating and vaporizing is 1000 °C-1800 °C;
h. a temperature of the condensing is 700 °C∼850 °C; and
i. time of the condensing is 1 h∼40 h.

10. The preparation method according to any one of claims 6-9, satisfying at least one of following conditions a∼f:
a. a mass fraction of oxygen element in the silicon composite negative electrode material is 15%∼35%;
b. a mass fraction of the M element in the silicon composite negative electrode material is 2%∼30%;
c. a mass fraction of carbon element in the silicon composite negative electrode material is 1%~25%;
d. the silicon composite negative electrode material has an average particle size of 0.5 µm∼50 µm;
e. the silicon composite negative electrode material has a specific surface area of 0.5 m²/g∼50 m²/g; and
f. the carbon coating layer has a thickness of 20 nm∼500 nm.

11. The preparation method according to any one of claims 6-10, wherein steps of performing a post-treatment on the silicon composite to obtain a silicon composite negative electrode material comprise:
pulverizing the silicon composite to obtain silicon composite particles; and
performing carbon coating and/or firing on the silicon composite particles to obtain the silicon composite negative electrode material.

12. The preparation method according to any one of claims 6∼10, wherein the method comprises following steps:
heating SiO and the metal M to 1000 °C∼1800 °C under vacuum of 0.1 Pa∼500 Pa for heating and vaporization, to obtain a mixed vapor composed of a silicon source vapor and a vapor containing the metal element M;
condensing the mixed vapor at 700 °C∼850 °C for 1 h∼40 h to obtain a silicon composite, wherein the silicon composite comprises a silicon oxide SiOₓ and a silicate, where 0<x<2, and the metal element M is at least one selected from the group consisting of Li, Mg, Al, and Ca; and
performing pulverization, carbon coating, and a firing treatment on the silicon composite so that a carbon coating layer is formed on at least part of surfaces of the silicon composite particles, to obtain the silicon composite negative electrode material.

13. A lithium ion battery, wherein the lithium ion battery contains the silicon composite negative electrode material according to any one of claims 1-5 or the silicon composite negative electrode material prepared according to the preparation method according to any one of claims 6-12.
